(19) Europäisches Patentamt
European Patent Office
Office européen des brevets

(11) **EP 4 375 115 A1**

(12) **EUROPÄISCHE PATENTANMELDUNG**

(43) Veröffentlichungstag:
**29.05.2024  Patentblatt 2024/22**

(21) Anmeldenummer: 23206038.4

(22) Anmeldetag: **26.10.2023**

(51) Internationale Patentklassifikation (IPC):
**B60L 3/00** *(2019.01)* **B60L 50/20** *(2019.01)*
**B62M 6/45** *(2010.01)* **H02P 25/024** *(2016.01)*
**H02P 23/14** *(2006.01)* **H02P 29/024** *(2016.01)*
**B62J 45/40** *(2020.01)* **B62M 6/50** *(2010.01)*
**H02P 6/22** *(2006.01)*

(52) Gemeinsame Patentklassifikation (CPC):
**B60L 50/20; B60L 3/0061; B62J 45/40; B62M 6/50;
H02P 6/22; H02P 23/14; H02P 29/024;
H02P 29/64;** B60L 2200/12; B60L 2240/429;
B62M 6/55; H02P 23/12

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **28.11.2022   DE 102022212728**

(71) Anmelder: **Robert Bosch GmbH
70442 Stuttgart (DE)**

(72) Erfinder:
• **Unmuth, Jochen
  72535 Heroldstatt (DE)**
• **Geyer, Florian
  72555 Metzingen (DE)**
• **Reimann, Alexander
  72147 Nehren (DE)**
• **Benzel, Timo
  72072 Tuebingen-Derendingen (DE)**

(54) **VERFAHREN ZUM BETREIBEN EINER ANTRIEBSEINHEIT EINES MIT MUSKELKRAFT UND/ODER MOTORKRAFT BETREIBBAREN FAHRZEUGS**

(57)    Die Erfindung betrifft ein Verfahren (20) zum Betreiben einer Antriebseinheit (1) eines mit Muskelkraft und/oder Motorkraft betreibbaren Fahrzeugs (10), welche einen Elektromotor (2) und eine Steuereinheit aufweist, wobei im Ansprechen auf einen Systemstart der Antriebseinheit (1) der Elektromotor (2) derart mit einem Start-Strom betätigt wird, dass der Elektromotor (2) in einer Rückwärts-Drehrichtung dreht.

Fig. 1

EP 4 375 115 A1

**Beschreibung**

Stand der Technik

Die vorliegende Erfindung betrifft ein Verfahren zum Betreiben einer Antriebseinheit eines mit Muskelkraft und/oder Motorkraft betreibbaren Fahrzeugs, eine Steuereinheit, und einen Elektromotor.

Bekannt sind Methoden zur Überwachung von Betriebsparametern von Elektromotoren, beispielsweise für Elektrofahrräder, mittels Sensoren. Häufig ist eine Kenntnis der Betriebsparameter für einen Betrieb des Elektromotors notwendig. Dabei wird beispielsweise bei einem Startvorgang eine Sensorik und Ansteuerung des Elektromotors initialisiert. Üblicherweise können dabei nicht sämtliche relevanten Eigenschaften des Elektromotors unmittelbar erfasst werden.

Offenbarung der Erfindung

Das erfindungsgemäße Verfahren mit den Merkmalen des Anspruchs 1 zeichnet sich demgegenüber dadurch aus, dass auf besonders einfache und zeiteffiziente Weise ein Systemstart der Antriebseinheit durchgeführt werden kann, insbesondere bei dem nach einer besonders kurzen Zeitspanne eine volle Drehmomentbereitstellung ermöglicht wird. Dies wird erfindungsgemäß erreicht durch ein Verfahren zum Betreiben einer Antriebseinheit eines mit Muskelkraft und/oder Motorkraft betreibbaren Fahrzeugs, vorzugsweise eines Elektrofahrrads. Die Antriebseinheit weist dabei einen Elektromotor und eine Steuereinheit auf. Bei dem Verfahren wird im Ansprechen auf einen Systemstart der Antriebseinheit der Elektromotor derart mit einem vorbestimmten Start-Strom betätigt, dass der Elektromotor in einer Rückwärts-Drehrichtung dreht.

Als Systemstart wird insbesondere eine Startroutine der Antriebseinheit des Fahrzeugs mit Elektromotor und Steuereinheit angesehen, wobei innerhalb dieser Startroutine die Antriebseinheit vollständig in einen Standby-Modus bzw. in Fahrbereitschaft versetzt wird. Bevorzugt wird dabei zumindest der Elektromotor und/oder die Steuereinheit in den Standby-Modus bzw. in Fahrbereitschaft versetzt. Beispielsweise kann als Systemstart ein Startvorgang des Elektromotors angesehen werden, nachdem der Elektromotor sich zuvor in einem ausgeschalteten Zustand befand, in welchem beispielsweise kein Betrieb des Elektromotors erfolgte.

Vorzugsweise weist der Systemstart eine maximale Dauer von 2 Sekunden, besonders bevorzugt maximal 1 Sekunde, auf. Das heißt, das Verfahren wird insbesondere ausschließlich innerhalb dieser Zeitspanne des Systemstarts durchgeführt.

Vorzugsweise kann der Systemstart mittels eines entsprechenden Systemstart-Signals ermittelt werden, sodass beispielsweise das Verfahren im Ansprechen auf die Ermittlung des Systemstart-Signals durchgeführt wird.

Der Start-Strom kann bevorzugt derart ausgebildet sein, dass nur die Drehbewegung des Elektromotors in der Rückwärts-Drehrichtung initiiert wird, insbesondere ohne dass eine signifikante Drehmomenterzeugung erfolgt. Das heißt, es kann ein Start-Strom mit geringer Stromstärke erzeugt werden, welche vorzugsweise ausreichend ist, um den Elektromotor in Drehbewegung zu versetzen.

Mit anderen Worten wird bei dem Verfahren beim Startvorgang der Antriebseinheit der Elektromotor derart mit dem Start-Strom betätigt, dass der Elektromotor, insbesondere ein Rotor des Elektromotors, in der Rückwärts-Drehrichtung gedreht wird. Als Rückwärts-Drehrichtung wird dabei insbesondere eine zu einer Vorwärts-Drehrichtung des Elektromotors entgegengesetzte Drehrichtung angesehen, wobei in der Vorwärts-Drehrichtung der Elektromotor ein Drehmoment erzeugen kann, das für einen Vortrieb des Fahrzeugs genutzt werden kann.

Das heißt, bei dem Verfahren wird der Elektromotor beim Systemstart, vorzugsweise unmittelbar gleichzeitig zum Systemstart, kurzzeitig derart betätigt, dass dieser in der Rückwärts-Drehrichtung dreht. Dadurch wird beim Systemstart eine Winkeländerung des Elektromotors, bzw. eines Rotors des Elektromotors, bewirkt. Dadurch ergeben sich zahlreiche Vorteile. Insbesondere kann dadurch auf einfache und zeiteffiziente Weise eine Überprüfung und Initialisierung beispielsweise der gesamten Motor-Sensorik und/oder der Motor-Software unmittelbar beim Systemstart des Elektromotors, und insbesondere unabhängig von der weiteren Betriebsweise des Elektromotors, erfolgen. Somit kann die volle Funktionsfähigkeit des Elektromotors automatisch nach besonders kurzer Zeit nach dem Systemstart bereitgestellt werden. Insbesondere ist es nicht notwendig, die Initialisierung während eines Normalbetriebs des Elektromotors durchzuführen, wodurch sich beispielsweise die Drehmomentbereitstellung verzögern würde. Dadurch, dass der Elektromotor in der Rückwärts-Drehrichtung gedreht wird bietet sich zudem der Vorteil, dass eine Drehmomentübertragung, beispielsweise an einen Antriebsstrang des Fahrzeugs, verhindert werden kann, sodass das Verfahren jederzeit ohne Auswirkung auf den Fahrbetrieb oder Stillstand des Fahrzeugs durchgeführt werden kann.

Die Unteransprüche haben bevorzugte Weiterbildungen der Erfindung zum Inhalt.

Bevorzugt wird der Elektromotor bei dem Verfahren für, insbesondere maximal, eine vorbestimmte Zeitspanne mit dem Start-Strom betätigt. Das heißt, es erfolgt eine gezielte, kurzzeitige Betätigung des Elektromotors mit dem Start-Strom im Ansprechen auf den erkannten Systemstart. Vorzugsweise beträgt die vorbestimmte Zeitspanne maximal 1 Sekunde, bevorzugt maximal 0,5 Sekunden. Damit kann besonders zeiteffizient und für den weiteren Betrieb des Elektromotors nicht störend die Inbetriebnahme des Elektromotors, insbesondere durch Initialisierungsmaßnahmen, ermöglicht werden.

Besonders bevorzugt umfasst das Verfahren ferner den Schritt: Initialisieren einer Motor-Sensorik und/oder einer Motor-Software des Fahrzeugs während des Betätigens des Elektromotors mit dem Start-Strom. Als Initialisieren wird insbesondere eine Vorbereitung der Motor-Sensorik und/oder der Motor-Software angesehen, derart, dass diese im Anschluss an die Initialisierung für den Normalbetrieb des Elektromotors vollständig betriebsbereit ist. Beispielsweise kann das Initialisieren eine Kalibrierung und/oder Funktionsprüfung von zumindest Teilen der Motor-Sensorik und/oder der Motor-Software umfassen. Durch das Drehen des Elektromotors in der Rückwärts-Drehrichtung kann dabei das Initialisieren auf besonders einfache und effiziente Weise automatisch beim Systemstart durchgeführt werden. Somit kann der Elektromotor nach dem Systemstart innerhalb einer besonders kurzen Zeitspanne in den Standby-Modus versetzt werden.

Vorzugsweise umfasst das Initialisieren der Motor-Sensorik und/oder der Motor-Software eine Rotorlage-Kalibrierung des Elektromotors. Als Rotorlage-Kalibrierung wird insbesondere eine Kalibrierung einer momentanen Lage eines Rotors des Elektromotors und/oder eines Winkelsensors der Motor-Sensorik und/oder einer Rotorlage-Software der Motor-Software angesehen. Durch die Winkeländerung des Rotors des Elektromotors, welche durch das Drehen des Elektromotors in der Rückwärts-Drehrichtung beim Systemstart erzeugt wird, kann die Rotorlage-Kalibrierung auf besonders einfache und effektive Weise erfolgen.

Weiter bevorzugt umfasst das Verfahren ferner den Schritt: Betätigen des Elektromotors im Ansprechen auf einen ermittelten Fahrerwunsch derart, dass der Elektromotor in eine Vorwärts-Drehrichtung dreht. Insbesondere erfolgt die Ermittlung des Fahrerwunsches mittels eines Fahrerwunsch-Sensors. Beispielsweise bei einem Elektrofahrrad kann als Fahrerwunsch eine Betätigung eines Kurbeltriebs des Elektrofahrrads angesehen werden, wobei insbesondere ein Tretmoment des Fahrers mittels des Fahrerwunsch-Sensors ermittelt werden kann. Insbesondere erfolgt bei der Vorwärts-Drehrichtung eine Rotation des Elektromotors, insbesondere des Rotors, in entgegengesetzter Drehrichtung zur Rückwärts-Drehrichtung. Bei der Vorwärts-Drehrichtung kann somit ein Motormoment erzeugt werden, welches zum Vortrieb des Fahrzeugs genutzt werden kann.

Besonders bevorzugt umfasst das Fahrzeug einen Freilauf zwischen dem Elektromotor und einem Antriebsstrang des Fahrzeugs. Vorzugsweise sperrt der Freilauf in Vorwärts-Drehrichtung, insbesondere sodass bei einer Drehung des Elektromotors in Vorwärts-Drehrichtung eine Drehmomentübertragung vom Elektromotor an den Antriebsstrang möglich ist. Weiter bevorzugt öffnet der Freilauf in Rückwärts-Drehrichtung, sodass bei der Drehung des Elektromotors in Rückwärts-Drehrichtung keine Drehmomentübertragung an den Antriebsstrang erfolgt. Dadurch wird ermöglicht, dass das Verfahren auf besonders einfache Weise und jederzeit durchgeführt werden kann, ohne dass dadurch ein Einfluss auf die Betriebsweise des Fahrzeugs erfolgt. Beispielsweise kann das Verfahren somit unabhängig von einem Stillstand oder einer momentanen Fortbewegung des Fahrzeugs durchgeführt werden.

Bevorzugt wird der Systemstart der Antriebseinheit im Ansprechen auf eine manuelle Start-Betätigung, welche vorzugsweise mittels einer Eingabevorrichtung eingebbar ist, initiiert. Das heißt, der Systemstart des Elektromotors kann durch einen Nutzer des Fahrzeugs manuell initiiert werden, beispielsweise durch Knopfdruck mittels der Eingabevorrichtung. Dadurch kann auf besonders einfache und effiziente Weise eine gezielte Überführung des Elektromotors von einem ausgeschalteten Zustand in den Standby-Modus ermöglicht werden.

Weiter bevorzugt wird der Systemstart der Antriebseinheit im Ansprechen auf eine Bewegung des Fahrzeugs relativ zu einer Umgebung des Fahrzeugs initiiert. Beispielsweise kann die Bewegung relativ zur Umgebung mittels einer Inertialsensorik des Fahrzeugs erfasst werden. Das heißt, beispielsweise wenn erkannt wird, dass das Fahrzeug von dem Nutzer bewegt wird, z.B. geschoben wird, kann automatisch der Systemstart des Elektromotors initiiert werden, um den Elektromotor in den Standby-Modus zu versetzen. Dadurch kann ein besonders hoher Nutzerkomfort für den Nutzer des Fahrzeugs bereitgestellt werden.

Vorzugsweise umfasst das Verfahren ferner den Schritt: Betätigen des Elektromotors mit einem Test-Strom in einer nicht-drehmomentbildenden Richtung, vorzugsweise während des Betätigens des Elektromotors mit dem Start-Strom. Als Test-Strom in der nicht-drehmomentbildenden Richtung wird ein Betätigungsstrom des Elektromotors, ohne dass eine Drehmomenterzeugung stattfindet, angesehen. Insbesondere wird der Test-Strom derart erzeugt, dass ein Statormagnetfeld parallel zu einem Rotormagnetfeld ausgerichtet ist. Dadurch wird durch das Statormagnetfeld keine Magnetkraft auf den Rotor ausgeübt, welche ein Antriebs-Drehmoment erzeugen würde. Insbesondere wird stattdessen durch den Test-Strom nur eine Magnetkraft auf den Rotor in radialer Richtung bewirkt. Dadurch kann mit einfachen Mitteln, insbesondere ohne zusätzliche Sensoren, eine Software-Diagnose des Elektromotors durchgeführt werden. Dabei können die Motorparameter mit hoher Genauigkeit ermittelt werden. Durch das Einprägen des Test-Stroms in der nicht-drehmomentbildenden Richtung kann das Verfahren auf einfache Weise jederzeit durchgeführt werden, beispielsweise auch in einem Stillstand des Fahrzeugs, wie unmittelbar nach dem Systemstart der Antriebseinheit. Somit kann vorzugsweise vor einem Fahrtantritt eines Elektrofahrrads das Verfahren durchgeführt werden, um die Initialisierung der Motor-Sensorik und/oder Motor-Software durchzuführen, sowie bevorzugt um Motorparameter des Elektromotors zu ermitteln. Vorzugsweise können basierend darauf eine Funktionsfähigkeit bzw. Defekte des Elektromotors bestimmt werden. Insbesondere erfolgt das Betätigen des Elektromotors mit dem Test-Strom dabei nur für eine kurze Zeitspanne, vorzugsweise von maximal 200 ms, besonders bevorzugt 100 ms. Dadurch kann beispielsweise ein von einem Fahrer des Fahrzeugs im wesentlichen unbemerkter Systemtest durchgeführt werden.

Vorzugsweise wird als Test-Strom ein vergleichsweise starker Strom erzeugt. Insbesondere weist der Test-Strom eine Stromstärke von mindestens 10 A, bevorzugt mindestens 20 A, auf.

Bevorzugt ist der Elektromotor eine Permanentmagnet-Synchronmaschine (kurz: PMSM). Insbesondere kann der Elektromotor somit zumindest teilweise als bürstenloser Gleichstrommotor ausgebildet sein. Ein derartiger Elektromotor zeichnet sich beispielsweise durch eine hohe Leistung bei geringem Gewicht aus und eignet sich insbesondere für die Verwendung in Elektrofahrrädern.

Bevorzugt umfasst das Verfahren ferner den Schritt: Abschätzen von zumindest einem Motorparameter des Elektromotors während des Betätigens des Elektromotors mit dem Test-Strom. Als Motorparameter können dabei vielfältige Parameter und/oder Eigenschaften des Elektromotors abgeschätzt werden, wie beispielsweise elektrische Eigenschaften. Durch das Einprägen des Test-Stroms kann dabei eine besonders einfache und präzise Abschätzung des Motorparameters erfolgen.

Besonders bevorzugt umfasst das Verfahren ferner den Schritt: Erfassen der folgenden Parameter des Elektromotors, während des Betätigens des Elektromotors mit dem Test-Strom: eine Winkeländerung eines elektrischen Winkels, eine Test-Spannung in der nicht-drehmomentbildenden Richtung, und den Test-Strom in der nicht-drehmomentbildenden Richtung. Dabei erfolgt das Abschätzen des zumindest einen Motorparameters durch Berechnung eines vorbekannten Maschinenmodells des Elektromotors basierend auf den folgenden Parametern: erfasste Winkeländerung, erfasste Test-Spannung, und erfasster Test-Strom. Mit anderen Worten werden bei dem Verfahren einfach zu erfassende Größen, nämlich der elektrische Winkel, die Test-Spannung, und der Test-Strom während einer Betätigung des Elektromotors mit dem Test-Strom in der nicht-drehmomentbildenden Richtung erfasst. Anhand dieser Größen werden mittels des Maschinenmodells, welches beispielsweise Eigenschaften des Elektromotors durch für den Elektromotor charakteristische mathematische Gleichungen abbildet, die Motorparameter durch eine entsprechende Berechnung des Maschinenmodells abgeschätzt. Dadurch kann auf einfache und effiziente Weise eine besonders präzise Abschätzung verschiedenster Motorparameter bei dem Systemstart der Antriebseinheit erfolgen.

Vorzugsweise weist das Maschinenmodell einen Spannungsoffset des Elektromotors als unbekannten Freiheitsgrad auf. Damit kann die Berechnung auf besonders einfache Weise erfolgen, wobei eine hohe Genauigkeit bei der Abschätzung der Motorparameter ermöglicht werden kann.

Besonders bevorzugt wird als Motorparameter mindestens ein Strangwiderstand des Elektromotors abgeschätzt. Vorzugsweise werden sämtliche Strangwiderstände des Elektromotors abgeschätzt. Insbesondere werden als Strangwiderstände jeweilige elektrische Widerstände von unterschiedlichen elektrischen Phasen des Elektromotors angesehen. Die Strangwiderstände sind jeweils von der Temperatur abhängig, sodass für eine genaue Kenntnis von Zuständen des Elektromotors die Temperatur bei der Ermittlung der Strangwiderstände vorteilhafterweise berücksichtigt wird. Das Verfahren erlaubt dabei eine derartige temperaturabhängige Bestimmung der Strangwiderstände, insbesondere da die erfassten Werte, die zur Berechnung des Maschinenmodells verwendet werden, ebenfalls von der Temperatur abhängig sind. Beispielsweise bei einem sternverschalteten Elektromotor liegen dabei insgesamt drei elektrische Phasen und somit insgesamt drei Strangwiderstände vor.

Bevorzugt erfolgt das Abschätzen der Strangwiderstände basierend auf folgenden Gleichungen:

$$\begin{pmatrix} Ud \\ Uq \end{pmatrix} = \begin{pmatrix} R11 & R12 \\ R21 & R22 \end{pmatrix} \begin{pmatrix} Id \\ Iq \end{pmatrix}$$

Dabei ist Id der Strom in der nicht-drehmomentbildenden Richtung, und Iq ist der Strom in der drehmomentbildenden Richtung. Vorzugsweise ist Iq bei der Durchführung des Verfahrens gleich Null. Analog ist Ud die Spannung in der nicht-drehmomentbildenden Richtung, und Uq die Spannung in der drehmomentbildenden Richtung. Für die Spannung in der nicht-drehmomentbildenden Richtung unter zusätzlicher Berücksichtigung des Spannungsoffsets $\Delta Ud, offset$ , und wenn Iq=0 ist, ergibt sich die Gleichung:

$$\Delta Ud, offset + Ud = R11 \cdot Id$$

Für R11, R12, R21 und R22 gelten die folgenden Gleichungen:

$$R11 = \frac{Rb + Rc}{2} + \frac{\cos^2(\varphi)}{3}(2Ra - Rb - Rc) - \frac{\sqrt{3}\,\sin(2\varphi)}{6}(Ra - Rb)$$

$$R12 = \frac{\sin(2\varphi)}{6}(Rb + Rc - 2Ra) - \frac{\sqrt{3}\,\cos(2\varphi)}{6}(Rb - Rc)$$

$$R21 = \frac{\sin(2\varphi)}{6}(Rb + Rc - 2Ra) - \frac{\sqrt{3}\,\cos(2\varphi)}{6}(Rb - Rc)$$

$$R22 = \frac{Rb + Rc}{2} + \frac{\sin^2(\varphi)}{3}(2Ra - Rb - Rc) - \frac{\sqrt{3}\,\sin(2\varphi)}{6}(Rb - Rc)$$

Dabei sind Ra, Rb und Rc die Strangwiderstände des Elektromotors und $\varphi$ der elektrische Winkel. Daraus ergibt sich die folgende Gleichung basierend auf welcher mittels des Schritts des Abschätzens die Strangwiderstände Ra, Rb und Rc abgeschätzt werden können:

$$\frac{Id}{2}\left[\frac{2\cos^2(\varphi)}{3}Id \; ; \; \frac{1}{2} - \frac{\cos^2(\varphi)}{3} - \frac{\sqrt{3}\,\sin(2\varphi)}{6} \; ; \; \frac{1}{2} - \frac{\cos^2(\varphi)}{3} + \frac{\sqrt{3}\,\sin(2\varphi)}{6} \; ; \; -\frac{1}{Id}\right]\begin{bmatrix} Ra \\ Rb \\ Rc \\ \Delta Ud, offset \end{bmatrix} = Ud$$

Bevorzugt kann als elektrischer Winkel ein momentaner Winkel zwischen elektrischen Strömen der unterschiedlichen Phasen des Elektromotors angesehen werden.

Bevorzugt erfolgt bei dem Verfahren ferner ein Vergleichen der abgeschätzten Strangwiderstände miteinander. Basierend auf dem Vergleich der abgeschätzten Strangwiderstände erfolgt anschließend ein Ermitteln, ob ein Defekt des Elektromotors vorliegt. Insbesondere wird dabei angenommen, dass in fehlerfreiem Zustand sämtliche Strangwiderstände des Elektromotors bei gleicher Temperatur die gleichen Widerstandswerte aufweisen. Somit kann durch das Vergleichen der mittels des Verfahrens präzise abgeschätzten Strangwiderstände, beispielsweise, wenn signifikante Abweichungen von mindestens zwei Strangwiderständen voneinander vorliegen, einfach und zuverlässig auf Defekte des Elektromotors geschlossen werden. Beispielsweise kann bei einem erkannten Defekt ein entsprechender Hinweis an den Fahrer des Fahrzeugs ausgegeben werden. Alternativ oder zusätzlich kann im Ansprechen auf einen erkannten Defekt ein Betrieb des Elektromotors, beispielsweise eine Stromversorgung mit einem Strom in der drehmomentbildenden Richtung, verhindert werden.

Besonders bevorzugt wird der Elektromotor als defekt erkannt, wenn zumindest zwei Strangwiderstände der mehreren abgeschätzten Strangwiderstände um einen vordefinierten Betrag voneinander abweichen. Mit anderen Worten wird der Elektromotor als defekt ermittelt, wenn mindestens zwei Strangwiderstände sich signifikant voneinander unterscheiden. Da insbesondere bei einem funktionsfähigen bzw. nicht defekten Elektromotor bei gleicher Temperatur im Wesentlichen gleiche Strangwiderstände vorliegen, kann somit auf besonders einfache Weise erkannt werden, ob ein Defekt im Elektromotor vorliegt.

Bevorzugt wird ein elektrisches Kontaktproblem des Elektromotors und/oder ein Teil-Kurzschluss am Elektromotor erkannt, wenn zumindest zwei der abgeschätzten Strangwiderstände um einen Faktor von mindestens 1,5, besonders bevorzugt von mindestens 2, voneinander abweichen. Mit anderen Worten wird ein abgeschätzter Strangwiderstand, der mindestens das 1,5-fache, insbesondere mindestens das 2-fache, eines anderen abgeschätzten Strangwiderstands beträgt, als Hinweis auf einen Defekt in Form eines elektrischen Kontaktproblems und/oder eines Teil-Kurzschlusses angesehen. Beispielsweise kann ein elektrisches Kontaktproblem durch einen nicht ordnungsgemäß verbundenen Stecker zur Stromversorgung des Elektromotors auftreten. Durch das Verfahren kann dies besonders einfach und zuverlässig erkannt werden.

Besonders bevorzugt wird das Abschätzen der Strangwiderstände durch Berechnen des vorbekannten Maschinenmodells, insbesondere der oben beschriebenen mathematischen Gleichungen, mittels eines schnellen DSFI-Algorithmus (auch Fast-DSFI-Algorithmus) durchgeführt. Dadurch kann eine besonders hohe Genauigkeit der ermittelten Strangwiderstände bereitgestellt werden.

Bevorzugt umfasst das Verfahren ferner den Schritt: Ermitteln von Wicklungs-Temperaturen mittels eines Temperatur-Beobachters. Als Eingangsgrößen des Temperatur-Beobachters werden dabei die abgeschätzten Strangwiderstände, sowie vorbekannte Kalibrier-Strangwiderstände und vorbekannte Kalibrier-Wicklungs-Temperaturen verwendet. Als Temperatur-Beobachter wird dabei insbesondere ein regelungstechnisches System angesehen, das aus bekannten Eingangsgrößen, und beispielsweise auch Ausgangsgrößen, eines beobachteten Systems nicht messbare Größen rekonstruiert. Im Detail werden dabei mittels des Temperatur-Beobachters eine Wicklungs-Temperatur des Elektromotors, welche der momentanen Temperatur von einer der Wicklungen bzw. Phasen des Elektromotors entspricht, ermittelt. Besonders bevorzugt werden jeweils Wicklungs-Temperaturen für sämtliche Wicklungen bzw. Phasen des Elektromotors ermittelt. Als vorbekannte Kalibrier-Strangwiderstände und vorbekannte Kalibrier-Wicklungs-Temperaturen werden Strangwiderstände bzw. Temperaturen der Wicklungen des Elektromotors angesehen, welche beispielsweise in einem einmaligen Test-Verfahren, zum Beispiel während der Herstellung des Elektromotors, gemessen wurden, und vorzugsweise abgespeichert sind. Insbesondere kann der Temperatur-Beobachter somit anhand der abgeschätzten momentan vorliegenden Strangwiderstände die momentanen Wicklung-Temperaturen des Elektromotors mit einfachen Mitteln und genau bestimmen.

Besonders bevorzugt erfolgt das Ermitteln der Wicklungs-Temperaturen $\vartheta$ mittels folgender Gleichung:

$$\vartheta = \frac{\left( \frac{R(\vartheta)}{R0(\vartheta 0)} - 1 \right)}{\alpha 0 + \vartheta 0}$$

Dabei ist $R(\vartheta)$ der jeweilige abgeschätzte Strangwiderstand, $R0(\vartheta 0)$ der Kalibrier-Strangwiderstand, $\vartheta 0$ die Kalibrier-Wicklungs-Temperatur, und $\alpha 0$ ein Wärmeübergangskoeffizient eines Materials der Wicklung des Elektromotors. Beispielsweise ist $\alpha 0$ der Wärmeübergangskoeffizient von Kupfer, wenn die Wicklung aus Kupfer gebildet ist.

Weiter bevorzugt umfasst das Verfahren ferner den Schritt: Erfassen einer Sensortemperatur des Elektromotors mittels eines Temperatursensors gleichzeitig zum Ermitteln der Wicklungs-Temperatur mittels des Temperatur-Beobachters. Die erfasste Sensortemperatur wird dabei als weitere Eingangsgröße des Temperatur-Beobachters verwendet. Insbesondere kann dadurch eine Genauigkeit der mittels des Temperatur-Beobachters ermittelten Wicklungs-Temperatur weiter erhöht werden.

Vorzugsweise umfasst das Verfahren ferner die Schritte:

- Ermitteln einer Beobachter-Sensortemperatur mittels des Temperatur-Beobachters, wobei die Beobachter-Sensortemperatur die Sensortemperatur repräsentiert,
- Vergleichen der Sensortemperatur und der ermittelten Beobachter-Sensortemperatur miteinander, und
- Korrigieren des Temperatur-Beobachters basierend auf dem Vergleich der Sensortemperatur und der Beobachter-Sensortemperatur.

Mit anderen Worten wird mittels des Temperatur-Beobachters zusätzlich die Beobachter-Sensortemperatur ermittelt, derart, dass diese einer Temperatur an dem Punkt, an welchem der Temperatursensor die Sensortemperatur misst, entspricht. Durch den Vergleich kann somit ein Schätzfehler des Temperatur-Beobachters ermittelt werden und basierend auf diesem Schätzfehler der Temperatur-Beobachter korrigiert werden. Somit kann eine besonders hohe Genauigkeit des Temperatur-Beobachters bereitgestellt werden.

Bevorzugt wird bei dem Verfahren für jede Wicklung des Elektromotors separat jeweils eine Wicklungs-Temperatur ermittelt. Dadurch können die Temperaturen des Elektromotors besonders präzise überwacht werden. Alternativ bevorzugt wird für sämtliche Wicklungen des Elektromotors gemeinsam eine globale Wicklungs-Temperatur ermittelt. Dadurch kann eine besonders einfache und kostengünstige Durchführung des Verfahrens bereitgestellt werden.

Weiter bevorzugt umfasst das Verfahren ferner die Schritte:

- Erfassen eines Betätigungsstroms, mittels welchem der Elektromotor, insbesondere während eines Betriebs des Fahrzeugs, betätigt wird, und
- Ermitteln einer Wicklungsverlustleistung des Elektromotors basierend auf den abgeschätzten Strangwiderständen und zusätzlich basierend auf dem ermittelten Betätigungsstrom. Insbesondere kann das Ermitteln der Wicklungsverlustleistung $P_{loss}$ basierend auf der folgenden Gleichung erfolgen:

$$P_{loss} = R(\vartheta) \cdot I_{phase}{}^2$$

mit dem abgeschätzten Strangwiderstand R(i9) und dem Betätigungsstrom $I_{phase}$. Dadurch kann eine weitere Eigenschaft des Elektromotors mit einfachen Mitteln und präzise überwacht werden.

Bevorzugt wird die ermittelte Wicklungsverlustleistung verwendet, um die Schätzgüte des Temperatur-Beobachters weiter zu verbessern. Beispielsweise kann die ermittelte Wicklungsverlustleistung dabei als zusätzliche Eingangsgröße des Temperatur-Beobachters verwendet werden. Insbesondere wirkt die Wicklungsverlustleistung dabei als Wärmestrom, der das Temperaturmodell anregt. Dadurch kann eine besonders hohe Genauigkeit des Temperatur-Beobachters ermöglicht werden.

Weiterhin führt die Erfindung zu einer Steuereinheit eines Elektromotors. Die Steuereinheit ist dabei eingerichtet, den Elektromotor zu betätigen, insbesondere um den Elektromotor mit einem Strom in einer drehmomentbildenden Richtung und in einer nicht-drehmomentbildenden Richtung zu versorgen. Bevorzugt wird der Strom von einem elektrischen Energiespeicher bereitgestellt. Die Steuereinheit ist dabei eingerichtet zur Durchführung des oben beschriebenen Verfahrens.

Ferner betrifft die Erfindung einen Elektromotor, der die beschriebene Steuereinheit umfasst. Vorzugsweise ist der Elektromotor vorgesehen zum Einsatz in einem Fahrzeug, besonders bevorzugt in einem Elektrofahrrad.

Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:

Figur 1    eine schematische Ansicht eines Elektrofahrrads bei welchem ein Verfahren gemäß einem bevorzugten Ausführungsbeispiel der Erfindung durchgeführt wird, und

Figur 2    eine stark vereinfachte schematische Ansicht der Verfahrensschritte des erfindungsgemäßen Verfahrens.

Bevorzugte Ausführungsformen der Erfindung

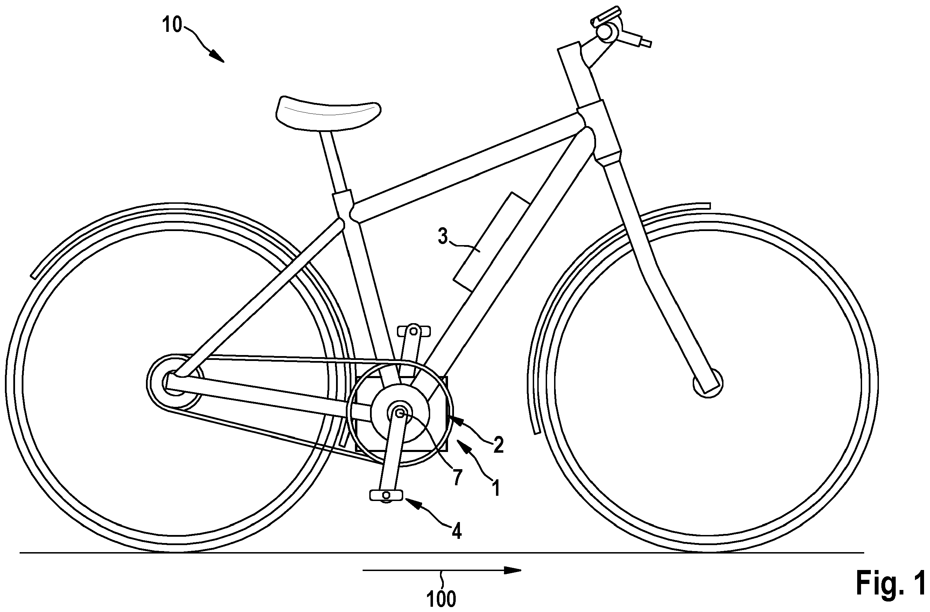

Figur 1 zeigt eine vereinfachte schematische Ansicht eines Elektrofahrrads 10. Das Elektrofahrrad 10 umfasst ein Antriebssystem 1, welches einen Elektromotor 2 aufweist. Der Elektromotor 2 ist im Bereich eines Tretlagers 7 des Elektrofahrrads 10 angeordnet, und vorgesehen, um eine mittels Pedalen 4 aufgebrachte manuelle Tretkraft eines Fahrers des Elektrofahrrads 10 durch ein elektromotorisch erzeugtes Drehmoment zu unterstützen.

Ferner umfasst das Antriebssystem 1 einen elektrischen Energiespeicher 3, mittels welchem der Elektromotor 2 mit elektrischer Energie versorgbar ist. In den Elektromotor 2 ist außerdem eine Steuereinheit integriert.

Die Steuereinheit ist dabei eingerichtet, ein Verfahren 20 zum Betreiben des Elektromotors 2 durchzuführen. Mittels des Verfahrens 20 kann eine Vorbereitung des Elektromotors 2 sowie einer Motor-Sensorik und einer Motor-Software bei einem Systemstart des Elektromotors 2 und vor einem Normalbetrieb, bei welchem eine Erzeugung des elektromotorischen Drehmoments zur Unterstützung der manuellen Tretkraft des Fahrers erfolgt, durchgeführt werden.

Ferner können mittels der Verfahrens Strangwiderstände der elektrischen Wicklungen des Elektromotors 2 ermittelt werden. Zudem kann eine Temperaturüberwachung des Elektromotors 2 mittels des Verfahrens 20 durchgeführt werden.

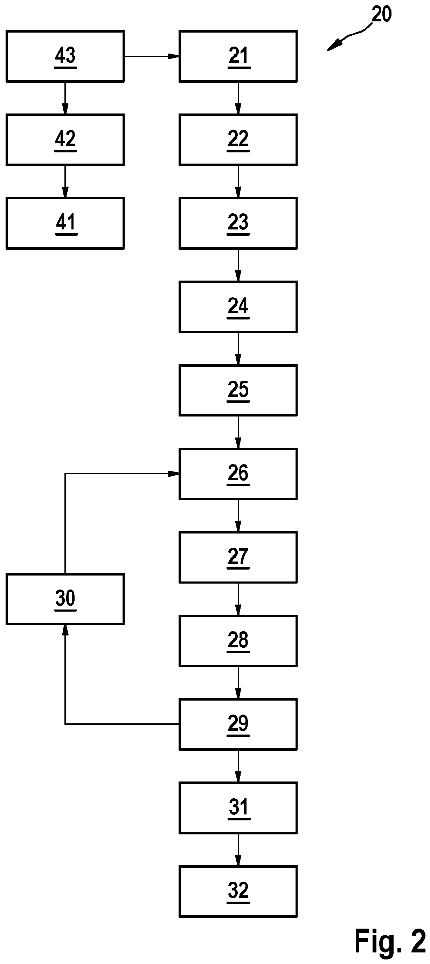

Der Ablauf des Verfahrens 20 ist stark vereinfacht schematisch in der Figur 2 dargestellt.

Das Verfahren 20 wird bei einem Systemstart des Elektromotors 2 durchgeführt, bevorzugt im Stillstand des Elektrofahrrads 10 und/oder während das Elektrofahrrad 20 von dem Fahrer geschoben wird.

Bei dem Verfahren 20 erfolgt zunächst eine Erkennung 41 des Systemstarts des Elektromotors 2. Die Erkennung 41 des Systemstarts kann anhand einer manuellen Start-Betätigung des Fahrers mittels einer Eingabevorrichtung, das heißt beispielsweise durch Knopfdruck, erfolgen. Alternativ oder zusätzlich kann die Erkennung 41 des Systemstarts anhand einer sensorbasierten Erkennung einer Bewegung des Elektrofahrrads 10 relativ zur Umgebung erfolgen.

Unmittelbar nach Erkennung 41 des Systemstarts des Elektromotors 2 erfolgt automatisch eine Betätigung 42 des Elektromotors 2 mit einem vorbestimmten Start-Strom für eine vorbestimmte Zeitspanne, von beispielsweise 0,5 Sekunden. Der Start-Strom ist dabei derart ausgebildet, dass ein Rotor des Elektromotors 2 in einer Rückwärts-Drehrichtung gedreht wird. Die Rückwärts-Drehrichtung ist dabei entgegengesetzt zu einer Vorwärts-Drehrichtung, wobei in der Vorwärts-Drehrichtung der Rotor des Elektromotors 2 derart dreht, dass ein entsprechend durch den Elektromotor 2 erzeugtes Drehmoment über einen Antriebsstrang des Elektrofahrrads 10 einen Vortrieb des Elektrofahrrads 10 in Fahrtrichtung A bewirkt.

Das Elektrofahrrad 10 weist dabei einen Freilauf zwischen dem Elektromotor 2 und dem Antriebsstrang auf, welcher derart ausgebildet ist, dass dieser bei Drehung des Elektromotors 2 in Vorwärts-Drehrichtung sperrt, das heißt eine Drehmomentübertragung bewirkt. Bei Drehung des Elektromotors 2 in Rückwärts-Drehrichtung öffnet der Freilauf und verhindert somit eine Drehmomentübertragung zwischen Elektromotor 2 und Antriebstrang. Dadurch kann der Elektromotor 2 bei der Betätigung mittels des Start-Stroms frei gedreht werden, ohne dass hierdurch eine Bewegung des Elektrofahrrads 10 bewirkt wird.

Während der Betätigung 42 des Elektromotors 2 mit dem Start-Strom erfolgt gleichzeitig ein Initialisieren 43 der Motor-Sensorik und der Motor-Software. Im Detail wird dabei unter anderem eine Rotorlage-Kalibrierung des Elektromotors 2 durchgeführt.

Das Initialisieren 43 erfolgt dabei während der Betätigung 42 des Elektromotors 2 mit dem Start-Strom. Nach Abschluss dieses Vorgangs befindet sich der Elektromotor 2 vorzugsweise in einem Standby-Modus, in welchem jederzeit eine normale Drehmomenterzeugung durch den Elektromotor 2 initiiert werden kann. Insbesondere kann dabei im Normalbetrieb des Elektromotors 2 ein Betätigen des Elektromotors 2 im Ansprechen auf einen ermittelten Fahrerwunsch derart erfolgen, dass der Elektromotor 2 in der Vorwärts-Drehrichtung gedreht wird und ein Motordrehmoment erzeugt, um das Elektrofahrrad 10 elektromotorisch unterstützt anzutreiben.

Gleichzeitig zum oder alternativ nach dem Betätigen 42 des Elektromotors 2 mit dem Start-Strom kann ein Betätigen 21 des Elektromotors 2 mit einem Test-Strom in einer nicht-drehmomentbildenden Richtung, das heißt derart, dass kein Drehmoment erzeugt wird, erfolgen. Während dieses Betätigens 21 erfolgt ein Erfassen 22 einer Winkeländerung eines elektrischen Winkels, einer Test-Spannung in der nicht-drehmomentbildenden Richtung, und des Test-Stroms in der nicht-drehmomentbildenden Richtung.

Basierend auf den beim Erfassen 22 erfassten Werten erfolgt anschließend ein Abschätzen 23 sämtlicher einzelner Strangwiderstände des Elektromotors 2. Das Abschätzen 23 wird durch eine Berechnung eines vorbekannten Maschinenmodells des Elektromotors 2 mittels eines schnellen DSFI-Algorithmus durchgeführt. Das Maschinenmodell ist dabei so ausgebildet, dass dieses einen Spannungsoffset des Elektromotors 2 als unbekannten Freiheitsgrad aufweist.

Durch das Verfahren 20 können somit auf einfache und kostengünstige Weise, insbesondere ohne dass zusätzliche Sensoren erforderlich sind, die momentanen Strangwiderstände des Elektromotors 2 abgeschätzt werden.

Anhand der abgeschätzten Strangwiderstände erfolgt anschließend ein Ermitteln 25, ob ein Defekt des Elektromotors 2 vorliegt. Dies wird basierend auf einem Vergleichen 24 der abgeschätzten Strangwiderstände miteinander durchgeführt. Sofern das Vergleichen 24 ergibt, dass zumindest zwei der abgeschätzten Strangwiderstände sich um einen Faktor von 2 oder mehr unterscheiden, das heißt, wenn einer der beiden verglichenen Strangwiderstände mindestens doppelt so groß ist wie der andere, wird der Elektromotor 2 bei dem Ermitteln 25 als "defekt" erkannt. Im Detail kann hierdurch auf ein elektrisches Kontaktproblem des Elektromotors 2 und/oder auf einen Teil-Kurzschluss am Elektromotor 2 geschlossen werden.

Weiterhin umfasst das Verfahren den Schritt eines Ermittelns 26 einer Wicklungs-Temperatur des Elektromotors 2. Bevorzugt wird das Ermitteln 26 gleichzeitig zum oder unmittelbar nach dem Schritt 23 durchgeführt.

Das Ermitteln 26 der Wicklungs-Temperatur erfolgt dabei mittels eines Temperatur-Beobachters, der als Eingangsgrößen die durch das Abschätzen 23 abgeschätzten Strangwiderstände, sowie vorbekannte Kalibrier-Strangwiderstände und eine vorbekannte Kalibrier-Wicklungs-Temperatur des Elektromotors 2 verwendet. Die Kalibrier-Strangwiderstände und die Kalibrier-Wicklungs-Temperatur sind vorzugsweise vorbekannte Parameter, welche beispielsweise bei einem Herstellungsverfahren des Elektromotors 2, zum Beispiel am sogenannten Bandende, ermittelt wurden.

Zur Optimierung des Temperatur-Beobachters erfolgt gleichzeitig zum Ermitteln 26 ein Erfassen 27 einer Sensortemperatur mittels eines Temperatursensors, der beispielsweise eine Temperatur innerhalb des Elektromotors 2 erfasst. Gleichzeitig erfolgt ein Ermitteln 28 einer Beobachter-Sensortemperatur mittels des Temperatur-Beobachters, also im Schritt 26, derart, dass die Beobachter-Sensortemperatur die Sensortemperatur des Temperatursensors repräsentiert. Anschließend erfolgt ein Vergleichen 29 der erfassten Sensortemperatur und der ermittelten Beobachter-Sensortemperatur miteinander. Basierend auf diesem Vergleichen 29 erfolgt ein Korrigieren 30 des Temperatur-Beobachters, insbesondere im Schritt 26, um die Ergebnisse des Temperatur-Beobachters zu verbessern.

Weiterhin kann das Verfahren 20, bevorzugt während eines Fahrbetriebs des Elektrofahrrads 10, die Schritte 31 und 32 umfassen. Im Schritt 31 erfolgt ein Erfassen 31 eines Betätigungsstroms, insbesondere in einer, drehmomentbildenden Richtung, mittels welchem der Elektromotor 2 betätigt wird. Gleichzeitig erfolgt ein Ermitteln 32 einer Wicklungsverlustleistung des Elektromotors 2 basierend auf den im Schritt 23 abgeschätzten Strangwiderständen und zusätzlich basierend auf dem ermittelten Betätigungsstrom.

Vorzugsweise kann die im Schritt 32 ermittelte Wicklungsverlustleistung ebenfalls als Eingangsgröße des Temperatur-Beobachters verwendet werden, um die Genauigkeit des Temperatur-Beobachters weiter zu verbessern. Die Wicklungsverlustleistung regt den Temperatur-Beobachter dabei in Form eines Wärmestroms an.

**Patentansprüche**

1. Verfahren zum Betreiben einer Antriebseinheit (1) eines mit Muskelkraft und/oder Motorkraft betreibbaren Fahrzeugs (10), welche einen Elektromotor (2) und eine Steuereinheit aufweist, wobei im Ansprechen auf einen Systemstart der Antriebseinheit (1) der Elektromotor (2) derart mit einem Start-Strom betätigt wird, dass der Elektromotor (2) in einer Rückwärts-Drehrichtung dreht.

2. Verfahren nach Anspruch 1, wobei der Elektromotor (2) für eine vorbestimmte Zeitspanne mit dem Start-Strom betätigt wird.

3. Verfahren nach einem der vorhergehenden Ansprüche, ferner umfassend den Schritt:

   - Initialisieren (43) einer Motor-Sensorik und/oder einer Motor-Software des Fahrzeugs (10) während des Betätigens des Elektromotors (2) mit dem Start-Strom.

4. Verfahren nach Anspruch 3, wobei das Initialisieren der Motor-Sensorik und/oder der Motor-Software eine Rotorlage-Kalibrierung umfasst.

5. Verfahren nach einem der vorhergehenden Ansprüche, ferner umfassend den Schritt:

   - Betätigen des Elektromotors (2) im Ansprechen auf einen ermittelten Fahrerwunsch derart, dass der Elektromotor (2) in eine Vorwärts-Drehrichtung dreht.

6. Verfahren nach einem der vorhergehenden Ansprüche, wobei das Fahrzeug (10) einen Freilauf zwischen dem Elektromotor (2) und einem Antriebsstrang umfasst, insbesondere wobei der Freilauf in Vorwärts-Drehrichtung sperrt und in Rückwärts-Drehrichtung öffnet.

7. Verfahren nach einem der vorhergehenden Ansprüche, wobei der Systemstart der Antriebseinheit (1) im Ansprechen auf eine manuelle Start-Betätigung, insbesondere mittels einer Eingabevorrichtung, initiiert wird.

8. Verfahren nach einem der vorhergehenden Ansprüche, wobei der Systemstart der Antriebseinheit (1) im Ansprechen auf eine Bewegung des Fahrzeugs (10) relativ zu einer Umgebung initiiert wird.

9. Verfahren nach einem der vorhergehenden Ansprüche, ferner umfassend den Schritt:

   - Betätigen (21) des Elektromotors (2) mit einem Test-Strom in einer nicht-drehmomentbildenden Richtung, insbesondere während des Betätigens mit dem Start-Strom.

10. Verfahren nach Anspruch 9, ferner umfassend die Schritte:

   - Abschätzen (23) von zumindest einem Motorparameter des Elektromotors (2) während des Betätigens (21) des Elektromotors (2) mit dem Test-Strom.

11. Verfahren nach Anspruch 10, ferner umfassend den Schritt:

   - Erfassen (22) einer Winkeländerung eines elektrischen Winkels, einer Test-Spannung in der nicht-drehmomentbildenden Richtung, und des Test-Stroms in der nicht-drehmomentbildenden Richtung während des Betätigens (21) des Elektromotors (2) mit dem Test-Strom,

   wobei das Abschätzen dem zumindest einen Motorparameter durch Berechnung eines vorbekannten Maschinenmodells des Elektromotors (2') basierend auf der erfassten Winkeländerung und/oder der erfassten Test-Spannung und/oder dem erfassten Test-Strom erfolgt.

12. Verfahren nach Anspruch 11, wobei das Maschinenmodell einen Spannungsoffset des Elektromotors (2) als unbekannten Freiheitsgrad aufweist.

13. Steuereinheit eines Elektromotors (2), welche eingerichtet ist zur Betätigung des Elektromotors (2) und zur Durchführung eines Verfahrens nach einem der vorhergehenden Ansprüche.

14. Elektromotor, umfassend eine Steuereinheit nach Anspruch 13.

Fig. 1

EP 4 375 115 A1

Fig. 2

Europäisches
Patentamt

European
Patent Office

Office européen
des brevets

# EUROPÄISCHER RECHERCHENBERICHT

**Nummer der Anmeldung**

EP 23 20 6038

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2014 201855 A1 (BOSCH GMBH ROBERT [DE]) 6. August 2015 (2015-08-06) | 1,2, 7-10,13, 14 | INV. B60L3/00 B60L50/20 |
| Y | * Absätze [0001], [0020], [0027], [0038], [0039], [0053]; Abbildungen 4A, 4B * | 3-6,11, 12 | B62M6/45 H02P25/024 H02P23/14 H02P29/024 |
| | ----- | | |
| Y | US 2021/344265 A1 (BINDER CHRISTIAN [DE] ET AL) 4. November 2021 (2021-11-04) | 3,4,11, 12 | B62J45/40 B62M6/50 |
| A | * Absätze [0022], [0027] * | 1,13,14 | H02P6/22 |
| | ----- | | |
| Y | DE 10 2020 202996 A1 (ZAHNRADFABRIK FRIEDRICHSHAFEN [DE]) 16. September 2021 (2021-09-16) | 5,6 | |
| A | * Absätze [0016], [0018] * | 1,13,14 | |
| | ----- | | |

**RECHERCHIERTE SACHGEBIETE (IPC)**

B60L
H02P
B62M
B62J

Der vorliegende Recherchenbericht wurde für alle Patentansprüche erstellt

| Recherchenort | Abschlußdatum der Recherche | Prüfer |
|---|---|---|
| Den Haag | 4. April 2024 | Wirth, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 20 6038

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2024

| Im Recherchenbericht angeführtes Patentdokument | Datum der Veröffentlichung | Mitglied(er) der Patentfamilie | | Datum der Veröffentlichung |
|---|---|---|---|---|
| DE 102014201855 A1 | 06-08-2015 | CN | 105934878 A | 07-09-2016 |
| | | DE | 102014201855 A1 | 06-08-2015 |
| | | EP | 3103190 A1 | 14-12-2016 |
| | | ES | 2727943 T3 | 21-10-2019 |
| | | HU | E044098 T2 | 30-09-2019 |
| | | WO | 2015113904 A1 | 06-08-2015 |
| US 2021344265 A1 | 04-11-2021 | CN | 113169653 A | 23-07-2021 |
| | | DE | 112018008215 A5 | 02-09-2021 |
| | | JP | 2022515054 A | 17-02-2022 |
| | | KR | 20210102402 A | 19-08-2021 |
| | | US | 2021344265 A1 | 04-11-2021 |
| | | WO | 2020125957 A1 | 25-06-2020 |
| DE 102020202996 A1 | 16-09-2021 | KEINE | | |

EPO FORM P0461

Für nähere Einzelheiten zu diesem Anhang : siehe Amtsblatt des Europäischen Patentamts, Nr.12/82